Europäisches Patentamt

European Patent Office

Office européen des brevets

(19)

(11) Veröffentlichungsnummer: **0 224 043**

**A2**

(12) **EUROPÄISCHE PATENTANMELDUNG**

(21) Anmeldenummer: 86114745.2

(22) Anmeldetag: 23.10.86

(51) Int. Cl.⁴: **B01D 53/34** , F23J 15/00

(30) Priorität: 23.11.85 DE 3541447

(43) Veröffentlichungstag der Anmeldung:
03.06.87 Patentblatt 87/23

(84) Benannte Vertragsstaaten:
AT BE DE FR GB IT LU NL SE

(71) Anmelder: **Rheinische Braunkohlenwerke AG.**
**Stüttgenweg 2**
**D-5000 Köln 41(DE)**

(72) Erfinder: **Ritter, Günter, Dr.-Ing.**
**Goethestrasse 29**
**D-5040 Brühl(DE)**
Erfinder: **Erken, Manfred, Dipl.-Ing.**
**Lothringer Ring 27**
**D-5010 Bergheim/Nideraussem(DE)**

(74) Vertreter: **Koepsell, Helmut, Dipl.-Ing.**
**Mittelstrasse 7**
**D-5000 Köln 1(DE)**

(54) Verfahren zur Verringerung der Schwefelemission von kohlegefeuerten Kraftwerken.

(57) Bei einem Verfahren zur Verringerung der Schwefelemission von kohlegefeuerten Kraftwerken mit Einrichtungen zur Entschwefelung und Denoxierung des Rauchgases wird der während der Denoxierung mit Restmengen an Schwefel verunreinigte Katalysator 13 bei gleichzeitiger Zufuhr von frischem Katalysator 12 in die Einrichtung 11 zur Denoxierung aus dieser Einrichtung entfernt und in den Kraftwerkskessel 1 geführt und dort zusammen mit der Kohle 2 verbrannt. Als frischer Katalysator 12 wird Herdofenkoks aus Braunkohle eingesetzt.

EP 0 224 043 A2

# Verfahren zur Verringerung der Schwefelemission von kohlegefeuerten Kraftwerken

Die vorliegende Erfindung betrifft ein Verfahren zur Verringerung der Schwefelemission von kohlegefeuerten Kraftwerken mit einer Einrichtung zur Entschwefelung des bei der Verbrennung der Kohle entstehenden Rauchgases und einer dieser Einrichtung nachgeschalteten Einrichtung zur Denoxierung des weitgehend entschwefelten Rauchgases in Gegenwart eines Katalysators aus aktivem Kohlenstoff vor der Abgabe des gereinigten Rauchgases an die Atmosphäre.

Es sind mehrere Verfahren bekannt, mit denen $SO_2$-und $NO_x$-haltige Rauchgase, die bei der Verbrennung von Kohle im Kraftwerk entstehen, von diesen Schadstoffen befreit werden. Eine bekannte Möglichkeit ist z. B. die $SO_2$-und $NO_x$-Entfernung durch Einsatz von Aktivkohlen oder Braunkohlenkoks. Die bekannten Verfahren werden entweder nur zur gleichzeitigen Entschwefelung und Denoxierung oder aber nur zur Denoxierung allein eingesetzt. Im Falle der alleinigen Denoxierung müssen die Rauchgase weitgehend frei sein von $SO_2$, da im Rauchgas noch vorhandene Reste von $SO_2$ in den zur Denoxierung vorgesehenen Katalysatoren aus Aktivkohle oder Braunkohlenkoks zurückgehalten werden und damit eine zunehmende Beladung des Katalysatormaterials herbeiführen. Die Denoxierung des Rauchgases als solche begrenzt die Standzeit des bekannten Katalysatormaterials nicht. Die Begrenzung der Standzeit wird jedoch vor allem durch den Restgehalt an $SO_2$ in dem entschwefelten Rauchgas verursacht. Die bekannten Katalysatoren aus aktivem Kohlenstoff wie z. B. Aktivkohle, Stein-und Braun kohlenkoks sind in Einrichtungen zur Denoxierung des Rauchgases in Form von Filtern angeordnet, welche von dem weitgehend entschwefelten Rauchgas durchströmt werden.

Nach einem bekannten Verfahren werden die Rauchgase, die bei der Verbrennung von Kohle im Kraftwerk entstehen, mit einer Einrichtung zur Naßwäsche entschwefelt und anschließend nach Zugabe von Ammoniak durch ein Festbettfilter von Braunkohlenkoks geleitet, in dessen Gegenwart die im Rauchgas enthaltenen Stickoxide durch das Ammoniak zu Stickstoff reduziert werden, wobei Wasser frei wird. Im Gegensatz zu anderen bekannten Katalysatoren ist der Braunkohlenkoks ein verhältnismäßig preiswertes Material, welches auch in ausreichenden Mengen verfügbar ist. Dieses Material kann jedoch nicht reaktiviert und muß nach der unvermeidlichen Beladung durch Schwefel entsorgt werden. Dabei ist es üblich, den mit Schwefelsäure und/oder Ammoniumsulfaten beladenen Braunkohlenkoks zu neutralisieren und anschließend zu deponieren. Beim Deponieren des beladenen Braunkohlenkokses ergeben sich jedoch Schwierigkeiten insofern, als Sonderdeponien angelegt werden müssen, um sicherzustellen, daß der Schwefel nicht aus dem Braunkohlenkoks vom Grundwasser ausgewaschen wird und dieses verunreinigt.

Der Erfindung liegt die Aufgabe zugrunde, die bekannten Verfahren zur Entschwefelung und Denoxierung von Rauchgasen weiter zu verbessern, zu verbilligen und die Menge des mit dem Rauchgas schließlich ausgeschiedenen Schwefels weiter zu verringern.

Erfindungsgemäß wird diese Aufgabe dadurch gelöst, daß man den während der Denoxierung mit Schwefel verunreinigten Katalysator aus der Denoxierungseinrichtung entfernt und im Kraftwerkskessel zusammen mit der Kohle verbrennt. Dies kann zweckmäßig in der Weise geschehen, daß gleichzeitig mit der Entfernung des mit Schwefel verunreinigten Katalysators aus der Denoxierungseinrichtung entsprechende Mengen an frischen Katalysator in die Denoxie rungseinrichtung eingeführt werden. Dieses Herausnehmen von verunreinigtem Katalysator und gleichzeitiges Hineingeben von frischen Katalysator kann kontinuierlich durchgeführt werden, und zwar mit einer Geschwindigkeit, die sich aus der Geschwindigkeit ergibt, mit welcher das Katalysatormaterial verunreinigt wird. Dies hängt im wesentlichen von den Rauchgasmengen und deren Restschwefelgehalt ab.

Eine besonders vorteilhafte Ausgestaltung dieses Verfahrens wird erzielt, wenn man als frischen Katalysator Herdofenkoks verwendet, der aus der Verkokung von Rheinischer Braunkohle gewonnen wurde. Das Verfahren zur Herstellung von Braunkohlenkoks im Herdofen ist ausführlich beschrieben in den nachfolgend genannten Veröffentlichungen:
H. B. Koenigs: "Feinkokserzeugung aus Braunkohle", Energiewirtschaftliche Tagesfragen, 27. Jahrgang (1977), Heft 8/9, S. 596-599 und
E. Scherrer: "Herstellung von Braunkohlenkoks im Salem-Lurgi-Herdofen" Braunkohle, Heft 7, Juli 1981, S 242 -246
D. Boecker: "Edle Körner", Energie, Jahrgang 35, Heft 3, 1983, S 35 -37.

In diesen Veröffentlichungen ist über die Herstellung von Herdofenkoks aus Braunkohle soviel mitgeteilt, wie zum besseren Verständnis des Hintergrundes der Erfindung erforderlich ist.

Durch das erfindungsgemäße Einbringen des bei der Denoxierung mit den Restmengen an Schwefel beladenen Katalysators aus Herdofenkoks in den Kessel wird der Kraftwerksprozeß insgesamt günstig beeinflußt. Die Rauchgasentschwefelung durch Naßwäsche hat eine wirtschaftliche Grenze der Abscheidung, die bei etwa 90 % des im Rauchgas enthaltenen Schwefels liegt. Eine wesentliche Steigerung des Abscheidegrades innerhalb der Naßwäsche ist nur mit unverhältnismäßig großem Aufwand zu erreichen und daher wirtschaftlich nicht vertretbar. Über die erfindungsgemäße Rückführung des schwefelbeladenen Herdofenkokses wird zwar der Verbrennung eine vergrößerte Menge an Schwefel zugeführt. Damit steigt auch die Menge des mit dem Rauchgas emittierten Schwefels. Jedoch werden von dieser vergrößerten Menge an Schwefel im Rauchgas in der Naßwäsche wiederum 90 % entfernt, so daß im Ergebnis auch die absolute Menge an in der Naßwäsche entferntem Schwefel vergrößert wird. Darin liegt der besondere Vorteil des erfindungsgemäßen Verfahrens.

Mit der Rückführung des schwefelbeladenen Herdofenkokses in den Verbrennungsprozeß entfällt das Problem der Entsorgung dieses Materials. Gleichzeitig wird durch die Verbrennung des kohlenstoffhaltigen Energieträgers von hohem Heizwert der Gesamtwirkungsgrad der Kraftwerksanlage verbessert.

Besondere Vorteile zum Einsatz des erfindungsgemäßen Verfahrens sind bei Kraftwerken gegeben, welche mit Braunkohle betrieben werden. Bei solchen Kraftwerken wurde eine beachtliche Verringerung des Restschwefelgehaltes an dem emittierten gereinigten Rauchgas erzielt.

Nachfolgend wird die Erfindung anhand eines Ausführungsbeispiels näher beschrieben.

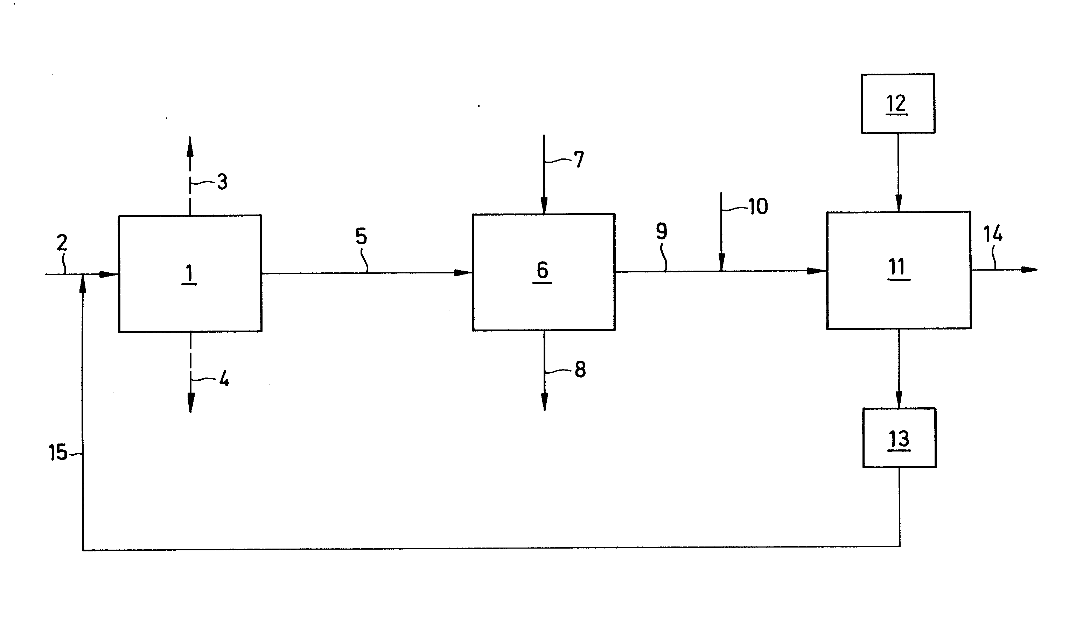

In der Figur ist eine Kraftwerksanlage - schematisch als Blockschaltbild dargestellt. In dem Kraftwerkskessel 1 wird Kohle 2 verbrannt und dabei Energie 3 beispielsweise in Form und Dampf abgegeben, wobei Asche 4 und Rauchgas 5 anfallen. Das mit $SO_2$-und $NO_x$-beladene Rauchgas 5 wird einer Einrichtung 6 zugeführt, in der das Rauchgas 5 entschwefelt wird, und zwar mittels einer Naßwäsche, wobei der Einrichtung 6 bei 7 Kalk und Wasser zuge führt werden und bei 8 Gips abgezogen wird. Das in dem Rauchgas 5 enthaltene Schwefeldioxid wird dabei innerhalb der Naßwäsche 6 nach folgender Gleichung umgewandelt:

$$SO_2 + Ca(OH)_2 + H_2O \rightarrow CaSO_4 + H_2O + H_2$$

Innerhalb der Naßwäsche 6 werden etwa 90 % des in dem Rauchgas 5 enthaltenen Schwefels abgeschieden. Das teilentschwefelte Rauchgas 9 wird nach Zugabe von Ammoniak 10 durch ein Filter 11 aus Braunkohlen-Herdofenkoks geleitet, in welchem im Rauchgas enthaltene Stickoxide mit dem Ammoniak gemäß den beiden nachfolgenden chemischen Gleichungen reagieren:

$$3\ NO + 2\ NH_3 \rightarrow 2,4\ N_2 + 3\ H_2O$$
$$3\ NO_2 + 4\ NH_3 \rightarrow 3,5\ N_2 + 6\ H_2O,$$

wobei der Herdofenkoks als Katalysator wirkt. Die Umwandlungstemperatur innerhalb der Denoxierung 11 beträgt zwischen 60°C und 120°C. Gleichzeitig belädt sich der Herdofenkoks 12 mit Schwefel in Form von sich bildendem Ammoniumsulfat gemäß Gleichung

$(NH_4)_2\ SO_4$

oder mit Ammoniumhydrogensulfat gemäß Gleichung

$(NH_4)\ HSO_4$.

Ggf. entsteht noch Schwefelsäure $H_2SO_4$.

Daneben ist auch eine Denoxierung ohne Ammoniak möglich. Diese verläuft gemäß den folgenden Reaktionen:

$$2C + 2NO_2 \rightarrow 2CO_2 + N_2$$
$$C + 2NO \rightarrow CO_2 + N_2$$

bei Temperaturen im Bereich von 120°C. Der mit Schwefel beladene Herdofenkoks 13 wird ggf. kontinuierlich aus dem Filter 11 abgezogen, wobei gleichzeitig entsprechende Mengen an frischem Herdofenkoks 12 in den Filter eingegeben werden, so daß zur Denoxierung des Rauchgases immer eine ausreichende Menge an wirksamem Katalysator im Filter 11 vorhanden ist.

Nach der Denoxierung 11 wird das gereinigte Rauchgas 14 in die Atmosphäre entlassen. Es enthält ungefähr noch etwa 10 % $NO_x$ und 5 % $SO_2$ entsprechend den in dengeltenden Verordnungen zur Reinhaltung der Luft zugelassenen Werten.

Der beladene Herdofenkoks 13 hat insgesamt einen Schwefelgehalt von 5 %. Er wird bei 15 zusammen mit der Kohle 2 in den Kessel 1 zur Verbrennung geführt. Das so gereinigte Rauchgas 14 wird über einen Kamin in die Atmosphäre entlassen.

Vom in der Kohle 2 enthaltenen Schwefelgehalt werden 90 % in der Naßwäsche 6 entfernt. Mit dem Schwefelgehalt des beladenen Herdofenkokses 15 und dem dem Schwefelgehalt der Kohle 2 werden insgesamt 105 % an Schwefel in den Kessel 1 eingebracht. Davon werden in der Naßwäsche 6 wiederum 90 % abgeschieden, so daß sich ein gesamter Abscheidungsgrad an Schwefel von 94,5 % ergibt, welcher schließlich im Gips 8 eingebunden ist.

## Ansprüche

1. Verfahren zur Verringerung der Schwefelemission von kohlengefeuerten Kraftwerken mit einer Einrichtung zur Entschwefelung des bei der Verbrennung der Kohle entstehenden Ruchgases und einer dieser Einrichtung nachgeschalteten Einrichtung zur Denoxierung des weitgehend entschwefelten Rauchgases in Gegenwart eines Katalysators aus aktivem Kohlenstoff vor der Abgabe des gereinigten Rauchgases an die Atmosphäre, dadurch gekennzeichnet, daß man den während der Denoxierung mit Schwefel verunreinigten Katalysator aus der Denoxierungseinrichtung entfernt, in den Kraftwerkskessel zurückführt und dort zusammen mit der Kohle verbrennt.

2. Verfahren nach Anspruch 1, dadurch gekennzeichnet, daß gleichzeitig mit der Entfernung des mit Schwefel verunreinigten Katalysators aus der Denoxierungseinrichtung entsprechende Mengen an frischen Katalysator in die Denoxierungseinrichtung eingeführt werden.

3. Verfahren nach Anspruch 1 oder 2, dadurch gekennzeichnet, daß man als frischen Katalysator Herdofenkoks aus Braunkohle einsetzt.

4. Verfahren nach einem der vorhergehenden Ansprüche, dadurch gekennzeichnet, daß man das Kraftwerk mit Braunkohle betreibt.

0 224 043